# EUROPÄISCHE PATENTSCHRIFT

(11) **EP 2 299 160 B1**
(45) Veröffentlichungstag und Bekanntmachung des Hinweises auf die Patenterteilung: **23.01.2013**
(21) Anmeldenummer: 10173957.1
(22) Anmeldetag: 25.08.2010
(51) Int. Cl.: F16N 21/02

(54) **Schmiernippel**
Lubrication nipple
Graisseur

(30) Priorität: 28.08.2009 DE 102009039002
(43) Veröffentlichungstag der Anmeldung: 23.03.2011
(73) Patentinhaber: GKN Walterscheid GmbH, 53797 Lohmar (DE)
(72) Erfinder: Penner, Alexander, 53819 Neunkirchen-Seelscheid (DE); Schäfer, Uwe, 53773 Hennef (DE)
(74) Vertreter: Müller, Thomas Michael

(56) Entgegenhaltungen:
- US-A- 1 946 063
- US-A- 2 439 053
- US-A- 3 542 155
- US-A- 3 568 800

## Beschreibung

Die Erfindung betrifft einen Schmiernippel zum Einpressen in eine Bohrung eines dünnwandigen Bauteils, insbesondere einer Lagerbüchse eines Kreuzgelenks, umfassend
ein Gehäuse mit einem Durchflusskanal für Schmiermittel und einem im Durchflusskanal angeordneten Rückschlagventil,
einem Sitzabschnitt, mit dem der Schmiernippel im montierten Zustand in der Bohrung sitzt,
einen Kuppelabschnitt, zum Kuppeln des Schmiernippels mit einer Abschmiereinrichtung, der eine dem Sitzabschnitt zugewandte erste Anschlagfläche aufweist, mit der der montierte Schmiernippel in Einpressrichtung axial gegen das dünnwandige Bauteil abstützbar ist, sowie einen Bundabschnitt, der eine der ersten Anschlagfläche gegenüberliegend angeordnete zweite Anschlagfläche aufweist, mit der der montierte Schmiernippel axial gegen das dünnwandige Bauteil abstützbar ist.

Schmiernippel gibt es in verschiedenen Ausführungsformen, wobei Schmiernippel häufig ein Gewinde aufweisen, mit dem diese in eine Gewindebohrung eingeschraubt werden oder in eine Bohrung ohne Gewinde selbstschneidend eingedreht werden. Zur Kostenreduzierung werden häufig sogenannte Schlagnippel verwendet, die in Bohrungen eingepresst oder geschlagen werden und mit Presssitz in der Bohrung sitzen. Solche gepressten Schmiernippel sind z.B. aus der EP 0 450 845 B1 bekannt, bei der eine mehrköpfige Schmiernippelanordnung mit mehreren Schmiernippeln versehen ist, wobei jeder Schmiernippel in eine entsprechende Bohrung eines Grundkörpers eingepresst ist. Ebenso zeigt die US 2 250 123 Schmiernippel, die in Bohrungen eingepresst werden, wobei unter anderem ein Presssitz in einer Bohrung eines dünnwandigen Bauteils gezeigt ist.

Nachteil bei den eingepressten oder eingeschlagenen Schmiernippeln ist es, dass die Haltekräfte des Schmiernippels ausschließlich von den Passungen des Presssitzes abhängig sind und somit verhältnismäßig geringe Ausziehkräfte ausreichen können, um den Schmiernippel aus der Bohrung zu entfernen, was z.B. durch Fliehkräfte oder Vibrationen bei Schmiernippeln der Fall sein kann, die in den Böden von Lagerbüchsen eines Kreuzgelenks einsitzen.

Bei großen Kräften, wie sie beispielsweise bei Kreuzgelenken durch Fliehkräfte auftreten, sind besonders hohe Haltekräfte erforderlich. Hierdurch ergeben sich bei der Montage hohe Einpresskräfte. Zudem ist es aufgrund der dünnen Wandstärken bei Lagerbuchsen von Kreuzgelenken schwierig, eine ausreichende Prozesssicherheit zu gewährleisten, die ausreichend geringe Abweichungen der Haltekraft nach Montage sicherstellt.

Schmiernippel zum Einpressen in dickwandige Bauteile zeigen die US 3 568 800 A und die US 1 946 063 A.

Aufgabe der vorliegenden Erfindung ist es, einen Schmiernippel vorzuschlagen, der kostengünstig montiert werden kann und insbesondere in dünnwandigen Bauteilen einen festen Halt gewährleistet.

Die Aufgabe wird erfindungsgemäß durch einen Schmiernippel gemäß Anspruch 1 gelöst.

Durch die zwei unterschiedlichen Steigungen der Fase wird das Einpressen erleichtert. Dadurch, dass die Fase zwei Fasenabschnitte unterschiedlicher Kegelwinkel aufweist, kann vor der Montage des Schmiermittels dieser zunächst teilweise in eine Bohrung eingeführt werden und danach eingepresst oder eingeschlagen werden, wobei der Schmiernippel zur Längsachse zentriert bleibt. Hierbei ermöglicht der zweite Fasenabschnitt eine Vorzentrierung des Schmiernippels, wobei der erste Fasenabschnitt als Einfädelschräge beim Einpressvorgang dient.

Ferner ist gewährleistet, dass der in der Bohrung sitzende Schmiernippel sich über die zweite Anschlagfläche des Bundabschnitts entgegen der Einpressrichtung abstützen kann und sicher in der Bohrung gehalten ist. Es ergibt sich somit eine Art Widerhaken, der einen formschlüssigen Halt des Schmiernippels in der Bohrung gewährleistet. Die Sicherung des Schmiernippels in der Bohrung ist somit nicht ausschließlich vom Presssitz des Schmiernippels in der Bohrung abhängig, so dass in einfacher Weise reproduzierbare Haltekräfte gewährleistet werden können. Zur Montage wird der Bundabschnitt zunächst durch die Bohrung des dünnwandigen Bauteils hindurchgepresst, wobei vorzugsweise der größte Außendurchmesser des Bundabschnitts derart dimensioniert ist, dass sowohl der Bundabschnitt als auch das dünnwandige Bauteil lediglich elastisch verformt werden. Sobald der Schmiernippel tief genug in die Bohrung eingepresst ist, verlässt der Bundabschnitt die Bohrung und setzt sich mit der zweiten Anschlagfläche hinter das dünnwandige Bauteil, wobei sich das dünnwandige Bauteil und der Bundabschnitt elastisch zurückverformen und einen sicheren formschlüssigen Halt bieten. Der Sitzabschnitt kann hierbei vorzugsweise derart dimensioniert sein, dass dieser mit Presssitz in der Bohrung sitzt. Hierzu ist der Sitzabschnitt zylindrisch gestaltet.

Vorzugsweise sind beide Anschlagflächen kreisringförmig gestaltet. Am Bundabschnitt kann hierbei am äußeren Umfang der zweiten Anschlagfläche eine scharfe Kante gebildet sein, so dass bei dem Versuch, den Schmiernippel aus der Bohrung zu ziehen, die scharfe Kante in das dünnwandige Bauteil bzw. in die Bohrung des dünnwandigen Bauteil einschneidet und einen zusätzlichen Halt gewährleistet.

Ausgehend von der zweiten Anschlagfläche kann vorgesehen sein, dass der Bundabschnitt in einen zylindrischen Abschnitt übergeht.

Es kann auch vorgesehen sein, dass der Bundabschnitt einen sägezahnförmig umlaufenden Zahn aufweist, der die zweite Anschlagfläche bildet. Somit kann am äußeren Umfang der zweiten Anschlagfläche eine noch schärfer ausgebildete Kante gebildet werden, die eine Art Schneidkante bildet. Um mehrere Schneidkanten bereitzustellen, können mehrere sägezahnförmige umlaufende Zähne vorgesehen sein, die beim Versuch, den Schmiernippel aus der Bohrung herauszuziehen, in das dünnwandige Bauteil einschneiden.

Der Kuppelabschnitt kann einen Kragen aufweisen, der für die erste Anschlagfläche vorgesehen ist. Der Kragen kann hierbei eine kreiszylindrische Außenumfangsfläche aufweisen oder derart gestaltet sein, dass Werkzeuge an diesem angreifen können, wie z.B. in Form eines Außensechskants.

Die Erfindung wird ferner durch eine Lagerbüchse für ein Kreuzgelenk gelöst, wobei die Lagerbüchse eine Bohrung aufweist, in der ein erfindungsgemäßer Schmiernippel sitzt. Die Lagerbüchse kann hierbei einen Boden aufweisen, in dem die Bohrung zentral angeordnet ist. Vorzugsweise ist die Lagerbüchse aus Blech gefertigt.

Bevorzugte Ausführungsbeispiele werden im folgenden anhand der Zeichnungen näher erläutert. Hierin zeigen
- Figur 1: einen Teillängsschnitt durch eine Lagerbüchse mit einer ersten Ausführungsform eines erfindungsgemäßen Schmiernippels;
- Figur 2: einen Längsschnitt durch den Schmiernippel gemäß Figur 1 und
- Figur 3: einen Teillängsschnitt einer Lagerbüchse mit einer zweiten Ausführungsform eines erfindungsgemäßen Schmiernippels.

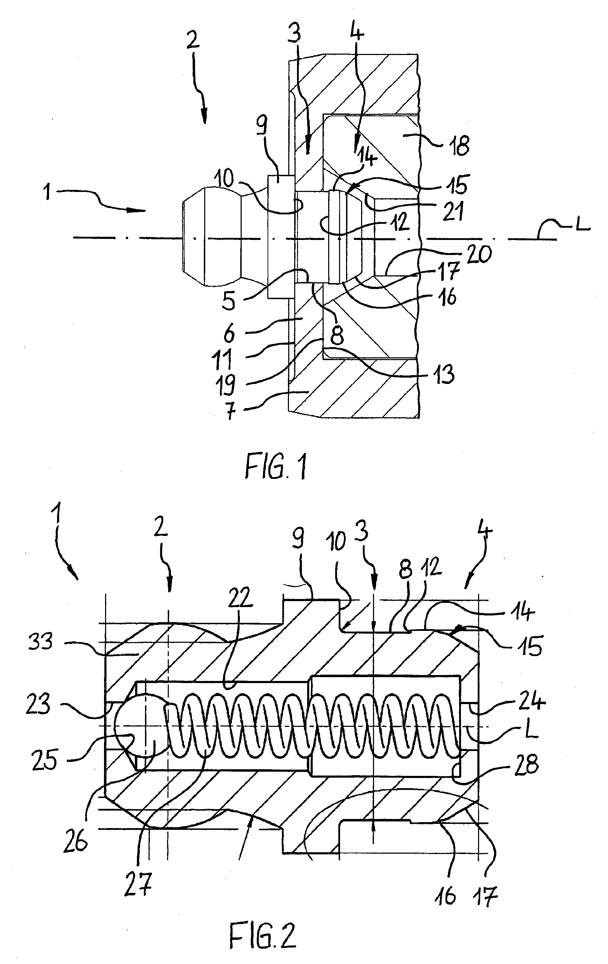

In Figur 1 ist eine erste Ausführungsform eines Schmiernippels 1 dargestellt, welcher einen Kuppelabschnitt 2 zum Kuppeln mit einer Abschmiereinrichtung, wie z.B. einer Fettpresse, aufweist. An den Kuppelabschnitt 2 schließt sich ein Sitzabschnitt 3 an, mit dem der Schmiernippel in einer Bohrung 5 sitzt. Im Anschluss an den Sitzabschnitt 3 folgt ein Bundabschnitt 4. Der Schmiernippel 1 sitzt in der Bohrung 5 eines Bodens 6 einer Lagerbüchse 7, wobei in der Lagerbüchse 7 ein Zapfen 18 eines Zapfenkreuzes drehbar gelagert ist.

Der Sitzabschnitt 3 weist eine zylindrische Außenumfangsfläche 8 auf, deren Außendurchmesser derart gestaltet ist, dass die Außenumfangsfläche 8 mit Presssitz in der Bohrung 5 sitzt, und bereits hierdurch einen Halt für den Schmiernippel 1 in der Lagerbüchse 7 bietet. Der Kuppelabschnitt 2 weist einen dem Boden 6 zugewandten, um eine Längsachse L umlaufenden Kragen 9 auf, der eine erste Anschlagfläche 10 bildet, mit dem der Schmiernippel 1 in Einpressrichtung, welche in der Darstellung gemäß Figur 1 nach rechts verläuft, axial gegen eine Außenfläche 11 des Bodens 6 abgestützt ist. Die erste Anschlagfläche 10 ist kreisringförmig gestaltet und auf einer gedachten Ebene angeordnet, die senkrecht zur Längsachse L angeordnet ist. Der Bundabschnitt 4 wiederum bildet eine zweite Anschlagfläche 12, die der ersten Anschlagfläche 10 gegenüberliegend angeordnet ist und welche ebenfalls kreisringförmig gestaltet und parallel zur ersten Anschlagfläche 10 angeordnet ist. Die zweite Anschlagfläche 12 kann sich gegen eine der Außenumfangsfläche 8 abgewandten Innenfläche 13 der Lagerbüchse 7 axial in Richtung der Längsachse L und entgegen der Einpressrichtung abstützen. Im dargestellten Zustand des Schmiernippels ist ein Spalt zwischen der Innenfläche 13 und der zweiten Anschlagfläche 12 vorgesehen, um eine sichere Montage beim Durchpressen des Bundabschnitts 4 durch die Bohrung 5 zu gewährleisten. Wenn jedoch eine Kraft entgegen der Einpressrichtung auftritt, kann der Schmiernippel 1 soweit aus der Bohrung 5 gedrückt werden, bis die zweite Anschlagfläche 12 in Anlage zur Innenfläche 13 gelangt.

An die zweite Anschlagfläche 12 schließt sich, abgewandt vom Sitzabschnitt 3, ein zylindrischer Abschnitt 14 des Bundabschnitts 4 an, welcher in eine Fase 15 übergeht. Die Fase 15 ist aufgeteilt in einen ersten Fasenabschnitt 16, welcher sich unmittelbar an den zylindrischen Abschnitt 14 anschließt, und einen zweiten Fasenabschnitt 17, der sich an den ersten Fasenabschnitt 16 zum Ende des Schmiernippels 1 anschließt. Die Fase 15 dient dazu, vor der Montage des Schmiernippels 1 den Schmiernippel zunächst teilweise in die Bohrung 5 einführen zu können und dann einpressen oder einschlagen zu können, wobei der Schmiernippel 1 zur Längsachse L zentriert bleibt. Hierbei ermöglicht der zweite Fasenabschnitt 17 eine Vorzentrierung des Schmiernippels 1, wobei der erste Fasenabschnitt 16 als Einfädelschräge beim Einpressvorgang dient. Hierzu sind beide Fasenabschnitte 16, 17 jeweils kegelstumpfförmig gestaltet, wobei der Kegelwinkel des ersten Fasenabschnitts 16 kleiner ist als der Kegelwinkel des zweiten Fasenabschnitts 17.

Im Übergang zwischen der zweiten Anschlagfläche 12 und dem zylindrischen Abschnitt 14 ist eine scharfe Kante 32 gebildet, welche bei Krafteinwirkung auf den Schmiernippel entgegen der Einpressrichtung in die Bohrung 5 einschneidet und somit zusätzlich Halt bietet.

Der zylindrische Abschnitt 14 des Bundabschnitts 4 ist derart dimensioniert, dass sich beim Einpressen des Schmiernippels 1 in die Bohrung 5 nur eine elastische Verformung des Bundabschnitts 4 und der Bohrung 5 bzw. des Bodens 6 ergibt, so dass sich nach dem Durchpressen des Bundabschnitts 4 sowohl der Bundabschnitt 4 als auch die Bohrung 5 wieder zurückverformen. Eine plastische Verformung ist an dieser Stelle zu vermeiden. Somit ist stets gewährleistet, dass sich der Bundabschnitt 4 sicher hinter die Bohrung 5 des Bodens 6 setzt und eine formschlüssige Sicherung des Schmiernippels 1 gewährleistet.

Der Zapfen 18 ist, wie bereits oben erwähnt, in der Lagerbüchse 7 drehbar gelagert und weist eine koaxial zur Längsachse L verlaufende Schmierbohrung 20 auf, welche am freien Ende 19, welches sich gegen die Innenfläche 13 des Bodens 6 abstützt, in eine zum freien Ende hin sich erweiternde Senkung 21 übergeht. Im montierten Zustand sitzt der Bundabschnitt 4 innerhalb der Senkung 21 des Zapfens 18. Schmiermittel wird somit durch den Schmiernippel 1 unmittelbar in die Schmierbohrung 20 des Zapfens 18 geleitet, von wo aus das Schmiermittel den übrigen Zapfen zugeführt wird.

Figur 2 zeigt einen Längsschnitt des Schmiernippels 1 gemäß Figur 1. Es ist ersichtlich, dass der Schmiernippel 1 ein Gehäuse 33 umfasst, in dem koaxial zur Längsachse L ein Durchflusskanal 22 verläuft, welcher kupplungsabschnittseitig einen verjüngten Bohrungsabschnitt 23 und bundabschnittseitig einen verjüngten Bohrungsabschnitt 24 aufweist. Im Übergang zum verjüngten Bohrungsabschnitt 23 am Kupplungsabschnitt 2 ist eine umlaufende Dichtkante 25 gebildet, gegen die sich eine Kugel 26 abstützt. Die Kugel 26 ist im Durchmesser größer bemessen, als der verjüngte Bohrungsabschnitt 23. Die Kugel 26 ist mittels einer Druckfeder 27 in Anlage zur Dichtkante 25 gehalten, wobei sich die Druckfeder 27 einerseits gegen die Kugel 26 und andererseits gegen Stützfläche 28 im Übergang zum bundabschnittseitigen verjüngten Bohrungsabschnitt 24 abstützt. Wenn eine Fettpresse mit dem Kupplungsabschnitt 2 verbunden ist, kann über diese Fett in den verjüngten Bohrungsabschnitt 3 gepresst werden, wobei sich die Kugel 26 von der Dichtkante 25 gegen die Federkraft der Druckfeder 27 abhebt und den Durchflusskanal 22 freigibt. Die Dichtkante 25, die Kugel 26 und die Druckfeder 27 sind somit Bestandteil eines Rückschlagventils.

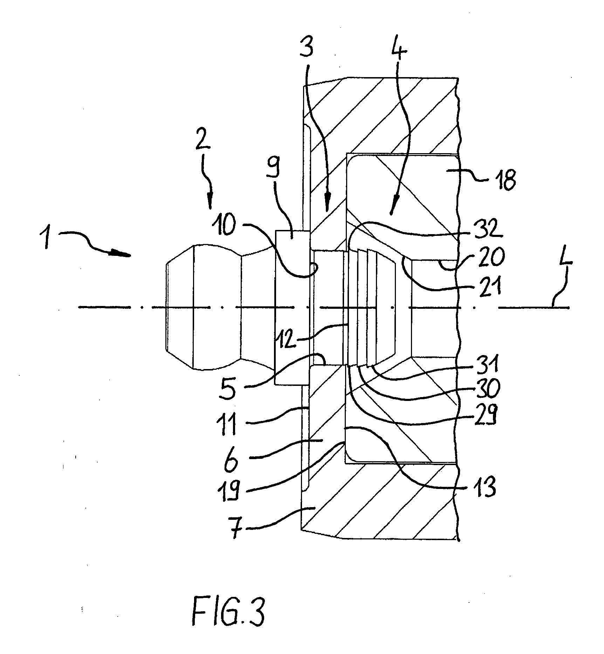

Figur 3 zeigt eine Ansicht wie Figur 1 mit einer zweiten Ausführungsform eines erfindungsgemäßen Schmiernippels 1, wobei übereinstimmende Bauteile mit den gleichen Bezugszeichen versehen sind.

Der Schmiernippel 1 gemäß Figur 3 unterscheidet sich vom Schmiernippel 1 gemäß Figur 1 durch die Ausgestaltung des Bundabschnitts 4. Der Bundabschnitt 4 weist hier drei umlaufende sägezahnförmige Zähne 29, 30, 31 auf. Der erste Zahn 29 schließt sich unmittelbar an den Sitzabschnitt 3 an und bildet die zweite Anschlagfläche 12. Aufgrund der im Längsschnitt sägezahnförmigen Profilierung des Zahns 29 ist eine schärfere Kante 32 am äußeren Umfang der zweiten Anschlagfläche 12 gebildet. An den ersten Zahn 29 schließt sich ein zweiter Zahn 30 an, der identisch zum ersten Zahn 29 gebildet ist. An den zweiten Zahn schließt sich ein dritter Zahn 31 an, der ebenfalls so gestaltet ist, wie der erste Zahn 29, wobei der dritte Zahn 31 die Fase 15 mit den beiden Fasenabschnitten 16 und 17 bildet. Die scharfen Kanten 32 der Zähne 29, 30, 31 wirken wie Schneidkanten und verhindern das unbeabsichtigte Lösen des Schmiernippels 1 aus der Bohrung 5.

### Bezugszeichenliste

- 1: Schmiernippel
- 2: Kuppelabschnitt
- 3: Sitzabschnitt
- 4: Bundabschnitt
- 5: Bohrung
- 6: Boden
- 7: Lagerbüchse
- 8: Außenumfangsfläche
- 9: Kragen
- 10: erste Anschlagfläche
- 11: Außenfläche
- 12: zweite Anschlagfläche
- 13: Innenfläche
- 14: zylindrischer Abschnitt
- 15: Fase
- 16: erster Fasenabschnitt
- 17: zweiter Fasenabschnitt
- 18: Zapfen
- 19: freies Ende
- 20: Schmierbohrung
- 21: Senkung
- 22: Durchflusskanal
- 23: verjüngter Bohrungsabschnitt
- 24: verjüngter Bohrungsabschnitt
- 25: Dichtkante
- 26: Kugel
- 27: Druckfeder
- 28: Stützfläche
- 29: erster Zahn
- 30: zweiter Zahn
- 31: dritter Zahn
- 32: scharfe Kante
- 33: Gehäuse

- L: Längsachse

## Patentansprüche

1. Schmiernippel (1) zum Einpressen in eine Bohrung (5) eines dünnwandigen Bauteils, insbesondere einer Lagerbüchse (7) eines Kreuzgelenks, umfassend
ein Gehäuse mit einem Durchflusskanal (22) für Schmiermittel und einem im Durchflusskanal (22) angeordneten Rückschlagventil (25, 26, 27),
einem Sitzabschnitt (3), mit dem der Schmiernippel (1) im montierten Zustand in der Bohrung (5) sitzt,
einen Kuppelabschnitt (2), zum Kuppeln des Schmiernippels (1) mit einer Abschmiereinrichtung, der eine dem Sitzabschnitt (3) zugewandte erste Anschlagfläche (10) aufweist, mit der der montierte Schmiernippel (1) in Einpressrichtung axial gegen das dünnwandige Bauteil (7) abstützbar ist, sowie einen Bundabschnitt (4), der eine der ersten Anschlagfläche (10) gegenüberliegend angeordnete zweite Anschlagfläche (12) aufweist, mit der der montierte Schmiernippel (1) axial gegen das dünnwandige Bauteil (7) abstützbar ist,
**dadurch gekennzeichnet,**
**dass** der Bundabschnitt (4) an einem vom Sitzabschnitt (3) entfernten Ende eine zum Ende hin verlaufende Fase (15) mit einem ersten Fasenabschnitt (16) und einem zweiten Fasenabschnitt (17) aufweist,
wobei beide Fasenabschnitte (16, 17) kegelstumpfförmig gestaltet sind und der Kegelwinkel des ersten Fasenabschnitts (16) kleiner ist als der Kegelwinkel des zweiten Fasenabschnitts (17).

2. Schmiernippel nach Anspruch 1,
**dadurch gekennzeichnet,**
**dass** der Sitzabschnitt (3) zylindrisch gestaltet ist.

3. Schmiernippel nach einem der vorangehenden Ansprüche,
**dadurch gekennzeichnet,**
**dass** der Durchmesser des Sitzabschnitts (3) derart dimensioniert ist, dass der Sitzabschnitt (3) im montierten Zustand des Schmiernippels (1) mit Presssitz in der Bohrung (5) sitzt.

4. Schmiernippel nach einem der vorangehenden Ansprüche,
**dadurch gekennzeichnet,**
**dass** die Anschlagflächen (10, 12) kreisringförmig gestaltet sind.

5. Schmiernippel nach einem der vorangehenden Ansprüche,
**dadurch gekennzeichnet,**
**dass** der Bundabschnitt (4) am äußeren Umfang der zweiten Anschlagfläche (12) eine scharfe Kante bildet.

6. Schmiernippel nach einem der vorangehenden Ansprüche,
**dadurch gekennzeichnet,**
**dass** der Bundabschnitt (4) von der zweiten Anschlagfläche (12) in einen zylindrischen Abschnitt (14) übergeht.

7. Schmiernippel nach einem der vorangehenden Ansprüche,
**dadurch gekennzeichnet,**
**dass** der Bundabschnitt (4) einen sägezahnförmigen umlaufenden Zahn (29) aufweist, der die zweite Anschlagfläche (12) bildet.

8. Schmiernippel nach Anspruch 7,
**dadurch gekennzeichnet,**
**dass** der Bundabschnitt (4) mehrere sägezahnförmige umlaufende Zähne (29, 30, 31) aufweist, von denen der dem Sitzabschnitt benachbarte Zahn (29) die zweite Anschlagfläche (12) bildet.

9. Schmiernippel nach einem der vorangehenden Ansprüche,
**dadurch gekennzeichnet,**
**dass** der Kuppelabschnitt (2) einen Kragen (9) bildet, an dem die erste Anschlagfläche (10) vorgesehen ist.

10. Lagerbüchse (7) für ein Kreuzgelenk, wobei die Lagerbüchse (7) eine Bohrung (5) aufweist, in der ein Schmiernippel (1) nach einem der vorherigen Ansprüche sitzt.

11. Lagerbüchse (7) nach Anspruch 10,
**dadurch gekennzeichnet,**
**dass** die Lagerbüchse (7) einen Boden (6) aufweist, in dem die Bohrung (5) zentral angeordnet ist.

12. Lagerbüchse (7) nach einem der Ansprüche 10 oder 11,
**dadurch gekennzeichnet,**
**dass** die Lagerbüchse (7) aus Blech gefertigt ist.

## Claims

1. Lubricating nipple (1) to be pressed into a bore (5) of a thin-walled component, especially a bearing bushing (7) of a universal joint, comprising
a housing with a flow-through passage (22) for lubricant and a check valve (25, 26, 27) arranged in the flow-through passage (22),
a seat portion (3), with which the lubricating nipple (1) rests in the bore (5) in the mounted condition,
a coupling portion (2) for coupling the lubricating nipple (1) to a lubricating device, which coupling portion (2) has a first abutment face (10) facing the seat portion (3) and with which the mounted lubricating nipple (1) is supportable in the pressing-in direction axially against the thin-walled component (7) as well as
a collar portion (4), which has a second abutment face (12), arranged opposite to the first abutment face (10) and with which the mounted lubricating nipple (1) is axially supportable against the thin-walled component (7), **characterised in**
**that** the collar portion (4) has at an end, distanced to the seat portion (3), a chamfer (15), extending towards the end, with a first chamfer portion (16) and a second chamfer portion (17),
wherein the two chamfer portions (16, 17) are formed truncated conically and the cone angle of the first chamfer portion (16) is smaller than the cone angle of the second chamfer portion (17).

2. Lubricating nipple according to claim 1,
**characterised in**
**that** the seat portion (3) is formed cylindrically.

3. Lubricating nipple according to one of the preceding claims,
**characterised in**
**that** the diameter of the seat portion (3) is dimensioned such, that the seat portion (3) rests in the mounted condition of the lubricating nipple (1) with interference fit in the bore (5).

4. Lubricating nipple according to one of the preceding claims,
**characterised in**
**that** the abutment faces (10, 12) are formed as a circular ring.

5. Lubricating nipple according to one of the preceding claims,
**characterised in**
**that** the collar portion (4) forms at the outer circumference of the second abutment face (12) a sharp edge.

6. Lubricating nipple according to one of the preceding claims,
**characterised in**
**that** the collar portion (4) merges from the second abutment face (12) into a cylindrical portion (14).

7. Lubricating nipple according to one of the preceding claims,
**characterised in**
**that** the collar portion (4) has a saw-tooth-like, circumferentially extending tooth (29), which forms the second abutment face (12).

8. Lubricating nipple according to claim 7,
**characterised in**
**that** the collar portion (4) has several saw-tooth-like, circumferentially extending teeth (29, 30, 31), of which the tooth (29), arranged next to the seat portion, forms the second abutment face (12).

9. Lubricating nipple according to one of the preceding claims,
**characterised in**
**that** the coupling portion (2) forms a collar (9), on which the first abutment face (10) is provided.

10. Bearing bushing (7) for a universal joint, wherein the bearing bushing (7) has a bore (5), in which a lubricating nipple (1) according to the preceding claims is arranged.

11. Bearing bushing (7) according to claim 10,
**characterised in**
**that** the bearing bushing (7) has a bottom (6), in which the bore (5) is centrally arranged.

12. Bearing bushing (7) according to one of claims 10 or 11,
**characterised in**
**that** the bearing bushing (7) is made from sheet metal.

## Revendications

1. Graisseur (1) pour enfoncer dans un alésage (5) un composant à paroi mince, en particulier une bague de palier (7) d'un joint à cardan, comprenant un boîtier avec un conduit d'écoulement (22) pour lubrifiant et un clapet antiretour (25, 26, 27) monté dans un conduit d'écoulement (22), une section d'appui (3), avec laquelle le graisseur (1) se cale dans l'alésage (5) à l'état monté, une section d'accouplement (2) pour accoupler le graisseur (1) avec un dispositif de graissage présentant une première surface de butée (10) tournée vers la section d'appui (3) avec laquelle le graisseur (1) monté peut être appuyé axialement contre le composant (7) à paroi mince dans le sens d'enfoncement, ainsi qu'une section d'assemblage (4) présentant une deuxième surface de butée (12) disposée opposée à la première surface de butée (10) avec laquelle le graisseur (1) monté peut être appuyé axialement contre le composant (7) à paroi mince
**caractérisé en ce que**
la section d'assemblage (4) présente sur une extrémité éloignée de la section d'appui (3) un chanfrein (15) allant vers l'extrémité avec une première section de chanfrein (16) et une deuxième section de chanfrein (17), les deux sections de chanfrein (16, 17) étant conçues tronconiques et l'angle de cône de la première section de chanfrein (16) étant plus petit que l'angle de cône de la deuxième section de chanfrein (17).

2. Graisseur selon la revendication 1 **caractérisé en ce que** la section d'appui (3) est conçue cylindrique.

3. Graisseur selon une des revendications précédentes **caractérisé en ce que** le diamètre de la section d'appui (3) est dimensionné de telle sorte que la section d'appui (3) est logée à l'état monté du graisseur (1) avec un ajustement sans jeu dans l'alésage (5).

4. Graisseur selon une des revendications précédentes **caractérisé en ce que** les surfaces de butée (10, 12) sont conçues en forme de couronne circulaire.

5. Graisseur selon une des revendications précédentes **caractérisé en ce que** la section d'assemblage (4) forme une arête tranchante à la périphérie extérieure de la deuxième surface de butée (12).

6. Graisseur selon une des revendications précédentes **caractérisé en ce que** la section d'assemblage (4) passe de la deuxième surface d'appui (12) dans une section cylindrique (14).

7. Graisseur selon une des revendications précédentes **caractérisé en ce que** la section d'assemblage (4) présente une dent (29) périphérique en forme de dent de scie qui forme la deuxième surface de butée (12).

8. Graisseur selon la revendication 7 **caractérisé en ce que** la section d'assemblage (4) présente plusieurs dents (29, 30, 31) périphériques en forme de dent de scie parmi lesquelles la dent (29) voisine de la section d'appui forme la deuxième surface de butée (12).

9. Graisseur selon une des revendications précédentes **caractérisé en ce que** la section d'accouplement (2) forme un collet (9) sur lequel la première surface de butée (10) est prévue.

10. Bague de palier (7) pour un joint à cardan, ladite bague de palier (7) présentant un alésage (5) dans lequel se loge un graisseur (1) selon une des revendications précédentes.

11. Bague de palier (7) selon la revendication 10 **caractérisée en ce que** ladite bague de palier (7) présente un fond (6) dans lequel l'alésage (5) est disposé au centre.

12. Bague de palier (7) selon une des revendications 10 ou 11 **caractérisée en ce que** ladite bague de palier (7) est fabriquée en tôle.
